# EUROPEAN PATENT APPLICATION

(11) **EP 4 610 092 A1**
(43) Date of publication of application: **03.09.2025**
(21) Application number: 25159591.4
(22) Date of filing: 24.02.2025
(51) Int. Cl.: B60L 50/53, B60L 9/00, B61L 15/00, B60L 3/04

(54) **ADAPTIVE DISCONNECTION SYSTEM**

(30) Priority: 28.02.2024 GB 202402849
(71) Applicant: JR Dynamics Limited, Cramlington Northumberland NE23 7FP (GB)
(72) Inventor: ROSINSKI, Jarek, Cramlington, NE23 7FP (GB)

(57) **Abstract**

An adaptive disconnection system for adaptively disconnecting electrical-current collectors of vehicles powered by vehicle-mounted electrical-current collectors which receive electrical power from a powerline network. The system comprises: data storage on which is stored a fault location map comprising data records indicative of fault locations of detected faults in the powerline network; location monitoring apparatus configured to monitor locations of vehicles that are powered from the powerline network via a vehicle-mounted electrical-current collector; proximity detection apparatus configured to detect, in conjunction with the fault location map and monitored locations, when a vehicle powered by a vehicle-mounted electrical-current collector is approaching a fault location, wherein, responsive to detecting a vehicle powered by a vehicle-mounted electrical-current collector is approaching a fault location, the proximity detection apparatus is configured to control an electrical-current collector position actuator on the vehicle approaching the fault location to move the electrical-current connector to a disconnected position.

## Description

### Technical Field

The present invention relates to techniques for adaptively disconnecting electrical-current collectors of vehicles powered by vehicle-mounted electrical-current collectors which receive electrical power from a powerline network.

### Background

Rail transport vehicles such as high-speed trains, light railway trains, and trams are commonly powered by electricity delivered via a current carrying powerline to the vehicle via a vehicle-mounted current collector.

A common example is the delivery of power from an overhead line via a "pantograph" assembly. These assemblies are typically roof-mounted and are designed to maintain constant contact with the overhead line.

Despite the sophistication of current rail systems, faults in overhead lines are common. Faults leading to misalignment or sagging of the contact wire (the main power-bearing wire) can be particularly serious. Misalignment can significantly disrupt the effective transfer of power to the train, as the pantograph may not maintain consistent contact with the wire. In worst-case scenarios, the contact wire may drop to a level where it poses a risk of entanglement with the pantograph or even detach from the overhead system altogether, risking damage to the pantograph assembly, causing power outages, and potentially leading to service disruptions or safety hazards.

Automatic Drop Devices (ADD) have been developed to automatically lower pantographs if damage is detected, typically through mechanisms such as a drop in pressure in an air pipe running along the carbon collector strip of the pantograph. ADDs can also sometimes be manually activated by the train driver. Although effective in preventing further damage after an incident has been detected, these systems act reactively rather than proactively.

The vast size of rail networks and the manual process involved in identifying faults can contribute to a significant delay between the occurrence of a fault and its resolution. This delay not only increases the risk of damage to pantographs and overhead lines but also affects the overall reliability and efficiency of rail services.

### Summary of the Invention

In accordance with a first aspect of the invention, there is provided a method of adaptively disconnecting electrical-current collectors of vehicles powered by vehicle-mounted electrical-current collectors which receive electrical power from a powerline network. The method comprises: storing, in data storage, a fault location map comprising data records indicative of fault locations of detected faults in the powerline network; monitoring locations of vehicles that are powered from the powerline network via a vehicle-mounted electrical-current collector; detecting, in conjunction with the fault location map and monitored locations, when a vehicle powered by a vehicle-mounted electrical-current collector is approaching a fault location, and responsive to which: controlling an electrical-current collector position actuator on the vehicle approaching the fault location to move the electrical-current connector to a disconnected position.

Optionally, the data storage comprises local data storage at each vehicle such that a local fault location map is stored locally at each vehicle, and the step of detecting when a vehicle is approaching a fault location is undertaken by a processor located locally at each vehicle by processing the fault location map and location data generated by a location monitor located locally at each vehicle, and, responsive to detecting the vehicle approaching the fault location, communicating by the processor a disconnect control signal to the electrical-current collector position actuator thereby controlling the electrical-current collector position actuator to move the electrical-current connector to a disconnected position.

Optionally, each vehicle comprises a fault detection system for detecting faults encountered in the powerline network which pose a damage risk to the vehicle-mounted electrical-current collector and/or the powerline network, a location monitor, and a data transceiver and, responsive to detecting a fault at a vehicle, said method further comprises: determining, using the location monitor, a location of the vehicle; generating, using the determined location, fault location data indicative of a location of the detected fault; communicating, using the data transceiver the fault location data to the other vehicles; receiving, using the data transceiver at each other vehicle, the fault location data, and updating, at each other vehicle, the local fault location map at the local data storage with the fault location data.

Optionally, the method further comprises: detecting when a vehicle that was approaching the fault location and that has had its electrical-current connector moved to a disconnected position, has passed the fault location, and responsive to which: controlling the electrical-current collector position actuator of the vehicle to move the electrical-current connector to a connected position.

Optionally, the method further comprises: detecting by the processor located locally at the vehicle, when a vehicle that was approaching the fault location, and that has had its electrical-current connector moved to a disconnected position, has passed the fault location by processing the fault location data and location data generated by the location monitor located locally at the vehicle, and responsive to which: communicating, by the processor, a reconnect control signal to the electrical-current collector position actuator thereby controlling the electrical-current collector position actuator to move the electrical-current connector to a connected position.

Optionally, responsive to receiving, using a data transceiver at each vehicle, a fault-rectified message indicative of a detected fault at a fault location being rectified, the method further comprises: updating, the local fault location map at the local data storage of each vehicle to remove the rectified fault location.

Optionally, the vehicles are track-based vehicles comprising one or more of a train or tram.

Optionally, the powerline network is an overhead powerline network.

Optionally, the electrical-current collector is a pantograph.

In accordance with a second aspect of the invention, there is provided an adaptive disconnection system for adaptively disconnecting electrical-current collectors of vehicles powered by vehicle-mounted electrical-current collectors which receive electrical power from a powerline network. The system comprises: data storage on which is stored a fault location map comprising data records indicative of fault locations of detected faults in the powerline network; location monitoring apparatus configured to monitor locations of vehicles that are powered from the powerline network via a vehicle-mounted electrical-current collector; proximity detection apparatus configured to detect, in conjunction with the fault location map and monitored locations, when a vehicle powered by a vehicle-mounted electrical-current collector is approaching a fault location, wherein, responsive to detecting a vehicle powered by a vehicle-mounted electrical-current collector is approaching a fault location, the proximity detection apparatus is configured to control an electrical-current collector position actuator on the vehicle approaching the fault location to move the electrical-current connector to a disconnected position.

Optionally, the data storage comprises distributed local data storage at each vehicle such that a local fault location map is stored locally at each vehicle; the location monitoring apparatus comprises a location monitor located locally at the vehicle and the proximity detection apparatus comprises a processor located locally at each vehicle which is configured to determine the location of the vehicle by processing the fault location map and location data generated by the location monitor, and, responsive to detecting the vehicle approaching the fault location, the processor is configured to: communicate a disconnect control signal to the electrical-current collector position actuator thereby controlling the electrical-current collector position actuator to move the electrical-current connector to a disconnected position.

Optionally, each vehicle comprises a fault detection system for detecting faults encountered in the powerline network which pose a damage risk to the vehicle-mounted electrical-current collector and/or the powerline network, a location monitor, and a data transceiver and, responsive to detecting a fault at a vehicle, the processor at the vehicle is configured to: determine, using the location monitor, a location of the vehicle; generate, using the determined location, fault location data indicative of a location of the detected fault; communicate, using the data transceiver, the fault location data to the other vehicles, whereupon, on receipt of the fault location data using the data transceiver at each other vehicle, the processor at each other vehicle is configured to update the local fault location map at the local data storage with the fault location data.

Optionally, the proximity detection apparatus is further configured to detect when a vehicle that was approaching the fault location and that has had its electrical-current connector moved to a disconnected position, has passed the fault location, and responsive to which control the electrical-current collector position actuator of the vehicle to move the electrical-current connector to a connected position.

Optionally, subsequent to the vehicle approaching the fault location, and having had its electrical-current connector moved to a disconnected position, the local processor of each vehicle is further configured to detect if the vehicle has now passed the fault location by processing the fault location data and location data generated by the local location monitor, and responsive to detecting the vehicle has now passed the fault location: communicate a reconnect control signal to the electrical-current collector position actuator thereby controlling the electrical-current collector position actuator to move the electrical-current connector to a connected position.

Optionally, in response to receiving via a local data transceiver, a fault-rectified message indicative of a detected fault at a fault location being rectified, the local processor at each vehicle is configured to update the local fault location map at the local data storage of each vehicle to remove the rectified fault location.

In accordance with a third aspect of the invention, there is provided an apparatus for adaptively disconnecting an electrical-current collector of a vehicle powered by a vehicle-mounted electrical-current collector which receives electrical power from a powerline network. The apparatus comprising: data storage on which is stored a fault location map comprising data records indicative of fault locations of detected faults in the powerline network; location monitoring apparatus configured to monitor a location of the vehicle; proximity detection apparatus configured to detect, in conjunction with the fault location map and monitored locations, when the vehicle is approaching a fault location, and responsive to detecting the vehicle is approaching a fault location, control an electrical-current collector position actuator on the vehicle to move the electrical-current connector to a disconnected position.

Optionally, the apparatus is configured to be fitted to the vehicle, wherein the proximity detection apparatus comprises a processor and the location monitoring apparatus comprises a location monitor, and the processor is configured to determine the location of the vehicle by processing the fault location map and location data generated by the location monitor apparatus, and, responsive to detecting the vehicle approaching the fault location, the processor is configured to communicate a disconnect control signal to the electrical-current collector position actuator thereby controlling the electrical-current collector position actuator to move the electrical-current connector to a disconnected position.

Optionally, the apparatus further comprises: a fault detection system for detecting faults encountered in the powerline network which pose a damage risk to the vehicle-mounted electrical-current collector and/or the powerline network, and a data transceiver. Responsive to the fault detection system detecting a fault, the processor is configured to: determine, using the location data generated by the location monitor, a location of the vehicle; generate, using the determined location, fault location data indicative of a location of the detected fault; communicate, using the data transceiver, the fault location data to other apparatus for adaptively disconnecting an electrical-current collectors located at other vehicles.

Optionally, subsequent to detecting that the vehicle was approaching a fault location, the processor is further configured to: detect if the vehicle, has now passed the fault location by processing the fault location data and location data generated by the location monitor, and responsive to detecting the vehicle has now passed the fault location: communicate a reconnect control signal to the electrical-current collector position actuator thereby controlling the electrical-current collector position actuator to move the electrical-current connector to a connected position.

Optionally, in response to receiving via the data transceiver, a fault-rectified message indicative of a detected fault at a fault location being rectified, the processor is configured to update the fault location map stored on the data storage to remove the rectified fault location.

Optionally, the fault detection system comprises a function running on the processor configured to process sensor data received from a sensor array mounted on the vehicle to determine if the sensor data is indicative of a fault.

Optionally, the sensor data is indicative of vibrations detected by the sensor array.

Optionally, the apparatus is configured as a module mountable to a roof of the vehicle connectable via an interface to the electrical-current collector position actuator.

Optionally, the electrical current collector position actuator is part of an Automatic Drop Device (ADD).

In accordance with a fourth aspect of the invention, there is provided a network comprising a plurality of interconnected apparatuses in accordance with the third aspect of the invention, where each apparatus further comprises: a fault detection system for detecting faults encountered in the powerline network which pose a damage risk to the vehicle-mounted electrical-current collector and/or the powerline network, and a data transceiver. Responsive to the fault detection system detecting a fault, the processor is configured to: determine, using the location data generated by the location monitor, a location of the vehicle; generate, using the determined location, fault location data indicative of a location of the detected fault; communicate, using the data transceiver, the fault location data to other apparatus for adaptively disconnecting an electrical-current collectors located at other vehicles.

In accordance with a fifth aspect of the invention, there is provided a method of adaptively disconnecting an electrical-current collector of a vehicle powered by a vehicle-mounted electrical-current collector which receives electrical power from a powerline network. The method comprises: storing, in data storage, a fault location map comprising data records indicative of fault locations of detected faults in the powerline network; monitoring a location of the vehicle; detecting, in conjunction with the fault location map and the monitored location, when the vehicle is approaching a fault location, and responsive to which: controlling an electrical-current collector position actuator on the vehicle to move the electrical-current connector to a disconnected position.

Optionally, in a system in accordance with the second aspect of the invention, or an apparatus in accordance with a third aspect of the invention, the vehicle, or vehicles, are track-based vehicles comprising one or more of a train or tram.

Optionally, in a system in accordance with the second aspect of the invention, or an apparatus in accordance with a third aspect of the invention, the powerline network is an overhead powerline network.

Optionally, in a system in accordance with the second aspect of the invention, or an apparatus in accordance with a third aspect of the invention, the electrical-current collector is a pantograph.

In accordance with a sixth aspect of the invention, there is provided a computer program comprising computer executable instructions which when implemented on a computing device, controls the computing device to perform a method according to claim the fifth aspect.

In accordance with a seventh aspect of the invention, there is provided a computer program comprising computer executable instructions which when implemented on a computing device, controls the computing device to perform a method according to claim the first aspect.

In accordance with certain examples of the invention, a technique is provided whereby a fault location map is maintained indicative of faults within a powerline network which may potentially pose a risk of causing damage if encountered by an electrical current collector, such as the pantograph of a train. The technique involves monitoring the location of vehicles using the powerline network in conjunction with the fault location map, to detect when a vehicle is approaching a fault location. If such an approach is detected, an actuator, which may be part of an otherwise conventional ADD, is automatically controlled to move the electrical current collector to a disconnected position thereby reducing a risk that damage will be incurred by the electrical current collector encountering the fault, for example by becoming entangled with a failed dropper.

Advantageously, in certain examples once it has been determined that a vehicle has passed by a fault location (typically by virtue of the vehicle's momentum), the electrical current collector position actuator can be automatically controlled to move the electrical current connector back to a connected position. Typically, this will reinstate propulsive power to the vehicle meaning it can continue its journey otherwise unimpeded by the fault.

Advantageously, in certain examples, the fault location map is maintained in data storage which is situated locally at each vehicle (for example within a roof-mounted pantograph monitoring unit). In combination with local location monitoring (for example provided by a GNSS receiver also located locally at the vehicle which also may form part of a roof-mounted pantograph monitoring unit), control of the electrical- current collector position actuator can be undertaken at each vehicle thereby the technique can be implemented autonomously of centralised control.

Further still, in certain examples, each vehicle is provided with a fault location detection system. This system is configured to detect any faults in the powerline encountered by the vehicle. This can be achieved using known techniques, for example via the detection of anomalous vibrations experienced by a pantograph assembly. If this happens, the system is configured to communicate fault location data to other vehicles using the powerline network so that the fault location map stored locally at each vehicle can be updated accordingly with the newly detected fault location.

Advantageously, in certain examples, the fault location detection system operating on each vehicle in combination with the locally stored fault location map form a distributed network of fault location detection and fault location data storage systems which can operate autonomously of any centralised control which means that action to mitigate risk of damage due to faults can be taken independently of the centralised identification of faults.

Various aspects and features of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram depicting an example of an adaptive disconnection system for reducing the risk of electrical current collector damage in accordance with certain embodiments of the invention;
Figure 2 provides a simplified schematic diagram depicting an example of a monitoring unit and ADD of a type suitable for use in the system shown in Figure 1;
Figure 3 depicts a decentralised network formed from a plurality of communicatively interconnected monitoring units which share fault location data with each other via communication interconnections, and each of which maintains a local version of a fault location map in accordance with certain embodiments of the invention;
Figure 4 depicts a flow diagram showing steps of a process performed by a pantograph-control function in accordance with certain embodiments of the invention;
Figure 5 depicts a flow diagram showing steps of a process performed by a fault-location data-generating function in accordance with certain embodiments of the invention;
Figure 6 depicts a flow diagram showing steps of a process performed by a fault-location map-update function in accordance with certain embodiments of the invention, and
Figures 7a and 7b provide a simplified schematic diagram depicting a pantograph monitoring unit implemented in accordance with certain examples of the invention.

### Detailed Description

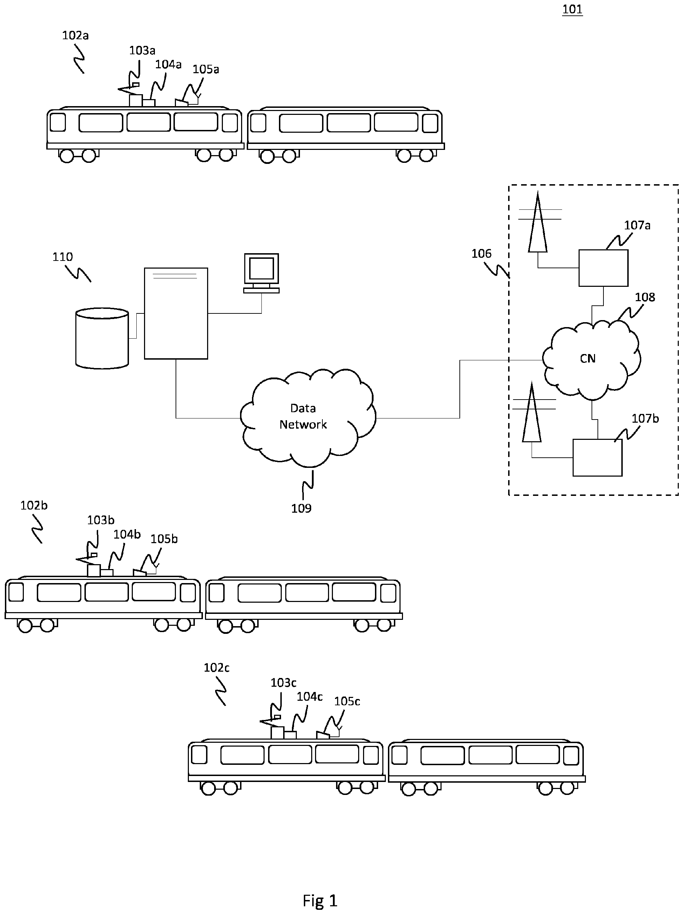

Figure 1 provides a simplified schematic diagram depicting an example of a system adaptively disconnecting electrical-current collectors of vehicles powered by vehicle-mounted electrical-current collectors which receive electrical power from a powerline network in accordance with certain embodiments of the invention.

The system comprises a plurality of vehicles configured to receive electrical power from a powerline networks via vehicle-mounted electrical-current collectors. In this example, the vehicles are trains 102a, 102b 102c, the electrical-current collectors are provided by power-receiving pantograph assemblies 103a, 103b, 103c and the powerline network is provided by a network of overhead powerlines suspended from gantries above the track along which the trains travel.

Each train 102a, 102b 102c is provided with an "automatic drop device" (ADD) 104a, 104b, 104c which is a device that is connected to the pantograph power-receiving assembly and can be controlled to retract the pantograph so that it becomes disconnected from the overhead powerline. Each train 102a, 102b 102c is also provided with a monitoring unit 105a, 105b, 105cwhich in this example is also located on the roof of each train and typically in close proximity to the pantograph power-receiving assembly. On the roof of each train, each monitoring unit 105a, 105b, 105c is connected via a control line to the ADD 104a, 104b, 104c.

Each monitoring unit 105a, 105b, 105c, is provided with a radio data transceiver, which is configured to communicate data to and from a public land line mobile network (PLMN) 106. The PLMN 106 comprises a plurality of geographically dispersed base stations 107a, 107b which are connected to a core network 108. The core network 108 is connected via a data network 109 (typically the internet) to a central computing system 110, which is typically running rail network monitoring software.

In this example, each monitoring unit 105a, 105b, 105c has stored thereon data providing a fault location map. This fault location map comprises data records indicative of locations within the transport network where faults have been detected that pose a damage risk to pantograph assemblies.

Each monitoring unit 105a, 105b, 105c is configured to monitor the location of the train on which it is mounted and, with reference to the stored fault location map and the monitored location, to detect if a train is approaching a fault location.

If a monitoring device detects that the train on which it is mounting is approaching a fault location, it communicates a "disconnect" control signal to the ADD to which it is connected, responsive to which the ADD retracts ("drops") the pantograph to a disconnected position in which the pantograph power-receiving assembly is disconnected from the overhead line. Typically, in this disconnected position, the linkage arms of the pantograph assembly are lowered thereby reducing the overall profile of the pantograph assembly. In turn, this reduces a risk of entanglement of the pantograph assembly with the powerline. Moreover, by disconnecting from the overhead line, the risk of potentially damaging power discharges is reduced.

In typical examples, auxiliary power units (typically batteries) keep any internal electrics running, such as lights, air conditioning, and power sockets within passenger carriages. Additionally, these auxiliary units typically ensure the continued operation of essential control systems within the train cab, including driver displays, operational controls and communication systems for maintaining contact with signalling centres.

However, for certain train types, whilst the pantograph is disconnected, the electric propulsion motors of the train are unpowered. In such cases, if the train is moving at a sufficient speed, the inherent low friction and momentum of the train will typically allow it to coast past the fault location. In other cases, where the electric propulsion motors can be powered from onboard auxiliary power units, these sources of power are activated.

When the train has passed the fault location with the pantograph in the disconnected position, the monitoring device communicates a "reconnect" control signal to the ADD which extends the pantograph back to a connected position in which the pantograph power-receiving assembly is reconnected to the overhead line.

In this example, the fault location map stored at each monitoring unit 105a, 105b, 105c is dynamically updated as new fault locations are identified. An update process can be performed by fault-location map-update messages being communicated via the PLMN 106 to each monitoring unit 105a, 105b, 105c.

These update messages can originate from any suitable source (e.g. centralised computer system where fault locations are tracked). However, advantageously, in certain examples, each monitoring unit 105a, 105b, 105c comprises functionality (a fault detection system) which is configured to detect faults which pose a pantograph damage risk, identify their location, and then communicate a corresponding fault map update message, via the PLMN 106, to the monitoring units on the other trains.

Once a fault has been fixed, a corresponding fault-location map-update message can be generated, for example at the central computing system 110, and communicated to each monitoring unit 105a, 105b, 105c via the PLMN 106.

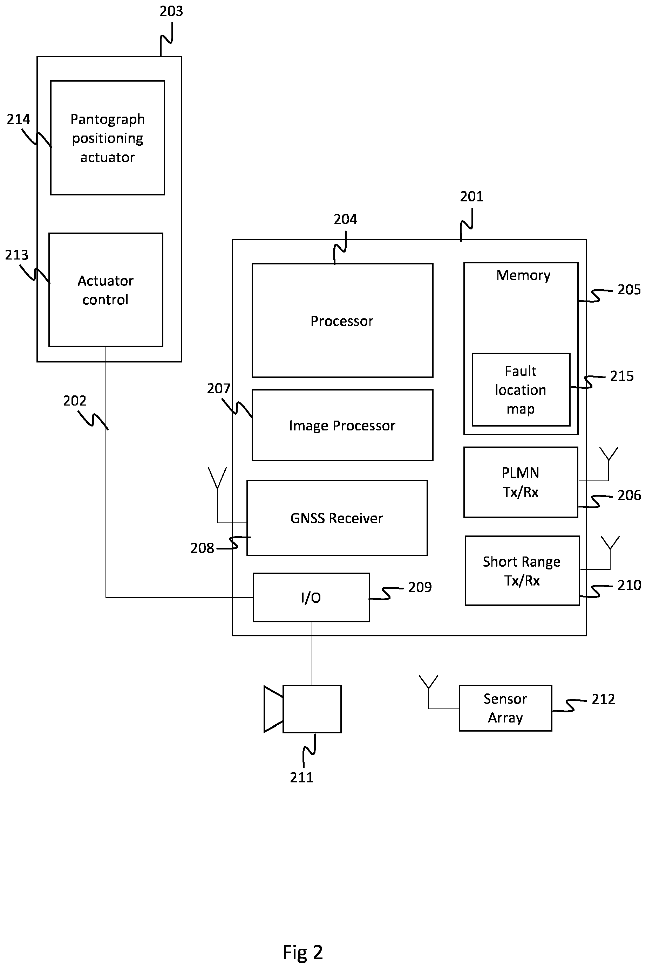

Figure 2 provides a simplified schematic diagram depicting an example of a monitoring unit 201 and ADD 203 of a type suitable for use in an adaptive disconnection system of the type described with reference to Figure 1.

As can be seen from Figure 2, the monitoring unit 201 is connected via a control line 202 to the ADD 203. As the skilled person will understand, the control line can be provided by any suitable means, for example a wired or wireless interface in accordance with known or custom standards.

The monitoring unit 201 comprises a processor 204, memory unit 205, a PLMN data transceiver 206, an image processor 207, a location monitoring unit, which in this example is provided by a GNSS receiver 208, an input/output interface 209 and a short-range radio transceiver 210. The monitoring unit 201 is connected to a camera unit 211 via the input/output interface 209.

The short-range radio transceiver 210 is configured to receive data from a sensor array 212. In typical examples, the sensor array comprises one or more vibration sensors mounted on the pantograph power-receiving assembly and equipped with a wireless transceiver for transmitting sensor data to the short-range radio transceiver 210. The short-range radio transceiver 210 can be provided by any suitable type of transceiver, for example Bluetooth, ZigBee, or Wi-Fi transceivers.

As the skilled person will understand, the other components of the monitoring unit 201 can be provided by any suitable means. For example, the processor 204 can be provided by any suitable microprocessor, microcontroller, or digital signal processor for performing the functions and processes described in more detail below. The data storage provided by the memory unit 205 can be any suitable form of data storage, for example non-volatile NAND flash memory or suitably configured volatile memory such as SDRAM. The image processor 207 can be provided by a dedicated image processing chip or a GPU. The GNSS receiver 208 can be provided by a GPS receiver or a GNSS module that supports multiple satellite systems for enhanced accuracy. The input/output interface 209 could be provided by USB interfaces, GPIO pins, or PCIe connections, depending on the required connectivity and data transfer rates.

In certain examples, the components of the monitoring unit 201 (comprising the processor 204, memory unit 205, PLMN data transceiver 206, image processor 207, GNSS receiver 208, output interface 209 and short-range radio transceiver 210, and in some cases the camera unit 211) may be located in a single housing such that the monitoring unit 201, including the camera, forms a single discrete unit.

The ADD 203 comprises an actuator controller 213 and a pantograph positioning actuator 214.

Although not shown, it will be understood that the monitoring unit 201 and ADD 203 are powered by suitable power units for example a separate battery power unit, or via a suitable connection to the train's power system.

As described above, the memory unit 205 has stored thereon a fault location map 215.

In use, the monitoring unit 201 is fitted to a train, specifically it is mounted on the roof of a train and the ADD 203 is suitably connected to the train's pantograph assembly. The monitoring unit 201 is located in close proximity to the pantograph assembly and in particular the camera unit 211 is positioned such that the pantograph assembly, and a portion of the overhead powerline with which the pantograph assembly is in contact, is in a field of view of the camera unit 211.

Typically, the processor 204 has running thereon a pantograph-control function. This function regularly compares real-time location data received from the GNSS receiver 208 with the fault location data of the fault location map 215 to detect if the train is approaching a fault location. This can be done in any suitable way, for example by detecting when the location data from the GNSS receiver 208 indicates that the train is within a predetermined proximity of a fault location. As will be understood, in this way, the processor 204, with the pantograph-control function running thereon, provides a locally implemented proximity detection apparatus which detects when the train is approaching a fault location.

If the pantograph-control function determines that a fault location is being approached, it controls the processor 204 to generate a "disconnect" control signal and communicate this via the input/output interface 209 via control line 202 to the actuator controller 213 of the ADD 203.

Responsive to receipt of the "disconnect" control signal, the actuator controller 213 controls the pantograph positioning actuator 214 to retract the pantograph to the disconnected position.

The pantograph-control function is further configured to determine when the train has passed the fault location. This can be done in any suitable way, for example, by determining when the location data from the GNSS receiver 208 indicates that the train is outside a predetermined proximity of the fault location.

When it is determined that the train has passed the fault location, the pantograph-control function controls the processor 204 to generate a "reconnect" control signal and communicate this via the input/output interface 209 via control line 202 to the actuator controller 213 of the ADD 203. Responsive to receipt of the "reconnect" control signal, the actuator controller 213 controls the pantograph positioning actuator 214 to extend the pantograph to the connected position.

In this example, the monitoring unit 201 is itself configured to generate fault location data if the train encounters a fault with the overhead powerline as it proceeds along the track.

To facilitate this, the processor 204 has running thereon a fault-location data-generating function which is configured to receive sensor data from the sensor array 212 and determine if the sensor data is indicative of a fault being encountered in the overhead powerline which may pose a damage risk to the vehicle-mounted electrical-current collector and/or the powerline network. As will be understood, in this way, the processor 204, with the fault-location data-generating function running thereon, in conjunction with the sensor array 212 provides a locally implemented fault detection system.

The fault-location data-generating function initially determines whether the sensor data is indicative of fault in the overhead powerline which may pose a damage risk to the vehicle-mounted electrical-current collector (in this case, the pantograph) and/or the powerline network (in this instance the overhead powerline and associated infrastructure).

As will be understood, this can be done in any suitable way. For example, threshold analysis can be performed by comparing vibration intensities against predefined levels to identify excessive vibrations or impacts; pattern recognition can be used to match vibration data with known patterns associated with faults or impact events using, for example, machine learning algorithms; frequency analysis can be conducted to detect changes in the vibration frequency spectrum that signal a fault; time series analysis can be used to analyse vibration data over time, to identify abrupt changes or trends, or anomaly detection algorithms can be implemented to identify unusual vibration patterns that deviate from the norm.

If the sensor data indicates a potential fault with the overhead powerline (for example an unusual vibration consistent with part of the pantograph power-receiving assembly (for example, the collector) being subject to an impact, the fault-location data-generating function retrieves the current location of the train from the GNSS receiver 208 and generates a fault-location map-update message comprising the current location. The processor 204 then controls the PLMN data transceiver 206 to communicate this fault-location map-update message, via a PLMN, to other monitoring units mounted on other trains in the transport network.

In a typical use-case, the sensor data may indicate that one or more "droppers" that suspend the contact line from the supporting catenary line have failed or are failing, and the contact line is sagging. In such a case, if further trains pass this location, the damage may worsen leading to pantograph entanglement with the contact line.

In the example described above, the locally implemented fault detection system is based on the processor running a fault-location data-generating function which processes sensor data from a sensor array comprising one or more vibration sensors and determines if the detected vibrations are associated with potential faults. However, as the skilled person will understand, the locally implemented fault detection system can be implemented in any suitable way allowing faults with the overhead powerline which pose a damage risk to the pantograph and/or the overhead powerline itself to be detected. In particular, any suitable sensor type can be used to detect any variable, associated with the overhead powerline, that would be indicative of a damage risk to the pantograph and/or the overhead powerline. Examples include one of, or a combination of, a sensor array that detects electrical anomalies through monitoring current, voltage, and resistance; a sensor array that detects acoustic signatures indicative of arcing or other faults; a sensor array equipped with thermal imaging for identifying overheating areas along the overhead line; a sensor array comprising visual inspection systems using cameras and image recognition software to detect physical signs of wear and tear or damage; a sensor array that monitors changes in the electromagnetic field around the overhead line through radio frequency (RF) monitoring; and a sensor array that detects alterations in the magnetic field indicating current leakage or other faults in the line.

In the example above, the location of the train is determined by the processor 204 using location data from the GNSS receiver 208. However, as will be understood, any suitable location monitoring apparatus can be used. For example, dead reckoning methods employing acceleration and angular velocity sensors to estimate the train's movement from a known position, Radio Frequency Identification (RFID) technology using tags along the track and readers on the train, Wi-Fi Positioning Systems (WPS) utilizing the signal strength of Wi-Fi networks along the railway, Bluetooth beacons for proximity-based location detection, optical tracking systems with cameras or sensors to recognize track markers or signs, inductive loop systems embedded in the track interacting with train-mounted receivers, transponders placed at fixed locations along the track, Inertial Navigation Systems (INS) using accelerometers and gyroscopes to calculate position independently, or cellular triangulation by measuring signal strengths from multiple cellular towers.

The processor 204 typically has running thereon a fault-location map-update function which is configured to control the processor 204 to update the local version of the fault location map 215 with the new fault location data generated by the processor 204.

As will be understood, in the event that a monitoring unit mounted on the roof of a different train detects a fault, a fault-location map-update message will be communicated to the monitoring unit 201 and received via the PLMN data transceiver 206. In the event of such a message being received, the fault-location map-update function is configured to control the processor 204 to update the fault location map 215 stored on the memory unit 205 with the new fault location.

It will be understood that in certain examples, fault location data may be received from other sources (for example the central computing system 110) if fault locations are detected by other means, for example from other fault detection systems.

Similarly, in the event that a fault has been fixed, and a corresponding fault-location map-update message (i.e. bearing a "fault-rectified" message and the relevant fault location) is received from, for example, a central computing system, the fault-location map-update function is configured to control the processor 204 to update the fault location map 215 stored on the memory unit 205 by, for example, removing/deleting data associated with the relevant fault location.

In certain examples, the camera unit 211 continuously operates, sending image data of the pantograph power-receiving assembly to the image processor 207. When the fault-location data-generating function receives sensor data indicating a potential fault, it controls the processor 204 to retrieve image data from the image processor 207 captured by the camera unit 211 in a period of time leading up to the detection of the fault. The processor 204 can then control the PLMN data transceiver 206 to communicate this image data to a remote image analysis system enabling the detected fault to be analysed.

In the example shown in Figure 2, the ADD 203 (which can be provided by an otherwise conventional ADD) and the monitoring unit 201 are shown as separate units. However, the skilled person will understand that alternative configurations are possible. For example, some or all of the component parts of the monitoring unit and ADD can be integrated into the same unit.

It will be understood that in examples in which monitoring units are configured to detect faults and share fault locations with each other, the stored fault location data is updated accordingly, the monitoring units together form a decentralised network for detecting fault locations and for maintaining a dynamically updated and distributed record of fault locations.

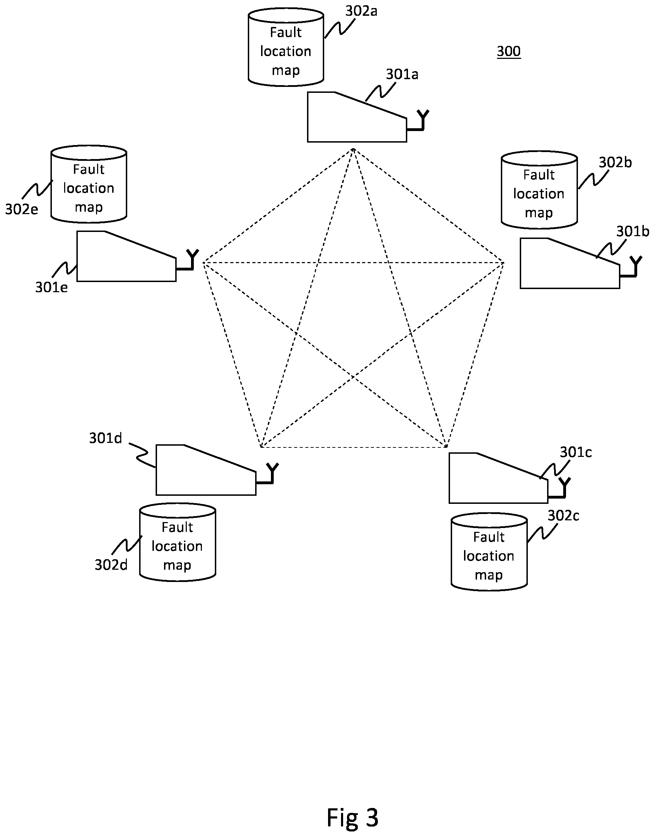

This concept is depicted in Figure 3 which depicts a decentralised network 300 formed from a plurality of communicatively interconnected monitoring units 301a, 301b, 301c, 301d, 301e which share fault location data with each other via communication interconnections and each of which maintains its own (a local) version of the fault location map 302a, 302b, 302c, 302d, 302e. Typically, the communication interconnections between the monitoring units 301a, 301b, 301c, 301d, 301e are facilitated by each monitoring unit being equipped with a suitable transceiver for communicating data to and from a suitable PLMN (for example a PLMN based on one or more cellular technologies, such as GSM (Global System for Mobile Communications), UMTS (Universal Mobile Telecommunications System), LTE (Long-Term Evolution), and 5G networks). However, in other examples, other forms of suitable communication means can be provided. For example, communication technologies such as satellite communication, Low-Power Wide-Area Network (LPWAN) protocols like LoRaWAN (Long Range Wide Area Network) and Sigfox, Narrowband loT (NB-loT), LTE-M (Long Term Evolution for Machines), Global System for Mobile Communications - Railway (GSM-R), Long-Term Evolution - Railway (LTE-R), Wi-Fi, Dedicated Short-Range Communications (DSRC), and the Future Railway Mobile Communication System (FRMCS) protocol.

As described above, in certain embodiments, key functions of the system, including the pantograph-control function, fault-location data-generating function, and fault-location map-update function are distributed and decentralised by being implemented locally on a processor at each train.

However, in alternative examples, such functions can be performed centrally. For example, the pantograph-control function and fault-location map-update function can be undertaken at a central location (for example the central computing system 110 described with reference to Figure 1). In such examples, the fault location map is maintained centrally (for example in data storage associated with the central computing system 110) and the location of the trains can also be monitored centrally at the central computing system 110 using well known techniques.

In such examples, when a centrally implemented pantograph-control function detects that a train is approaching a fault location, it is configured to communicate, for example via the PLMN 106, a "disconnect" control signal to the monitoring unit of the train in question, which then communicates the "disconnect" control signal to the ADD to which it is connected. The ADD then operates as described above by retracting the pantograph to the disconnected position. Subsequently, when the centrally-implemented pantograph-control function determines that the train has passed the fault location it communicates a "reconnect" control signal to the monitoring unit which communicates the "reconnect" control signal to the ADD which extends the pantograph to the connected position.

Similarly, when new information is received about a newly detected fault location (either from a monitoring unit or from another source) or information received about a previous fault being rectified, the centrally-implemented fault-location map-update function is configured to make a corresponding update to the centrally-implemented fault location map.

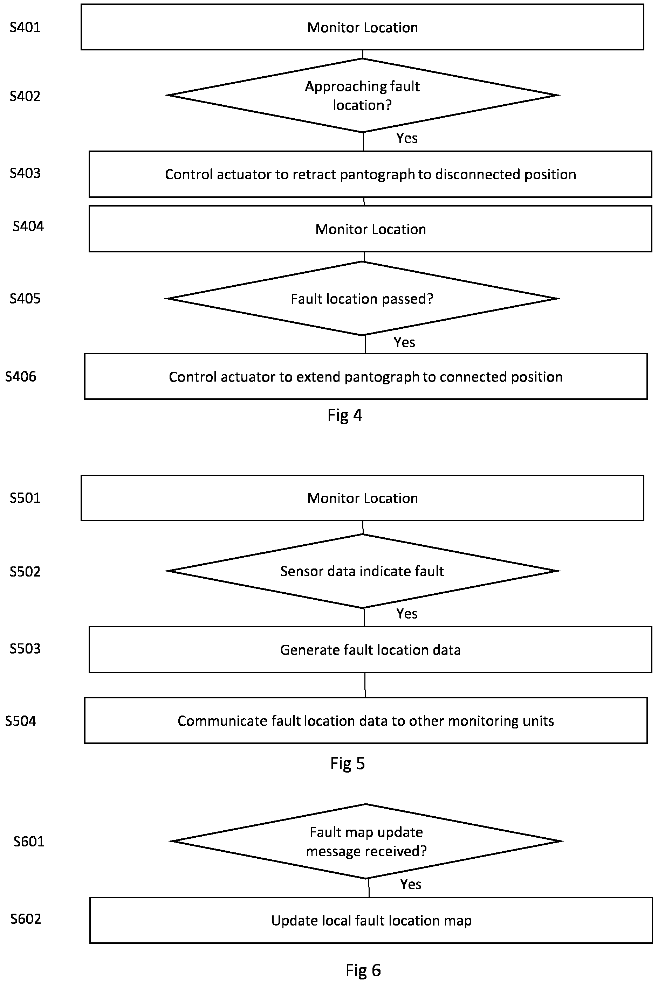

Figure 4 depicts a flow diagram showing steps of a process performed by a pantograph-control function operating on a processor incorporated in a pantograph monitoring unit in accordance with certain embodiments of the technique. At a first step S401, the location of the train is monitored. If at a second step S402, it is determined with reference to the monitored location and the fault location map, that the train is approaching a fault location, the process proceeds to a third step as S403 where a control signal is generated and communicated to an actuator (for example an actuator of an ADD) which controls the actuator to retract the pantograph and move it to a disconnected position. At a fourth step, S404, the location of the train continues to be monitored. If at a fifth step S405, it is detected, again with reference to the monitored location and the fault location map, that the train has passed the fault location, at a sixth step S406, a control signal is generated and communicated to the actuator which controls the actuator to extend the pantograph and move it to a connected position.

Figure 5 depicts a flow diagram showing steps of a process performed by a fault-location data-generating function operating on a processor incorporated in a pantograph monitoring unit in accordance with certain embodiments of the technique. At a first step S501, the location of the train is monitored. If at a second step S502, sensor data is received indicative of a fault which may pose a damage risk to the pantograph, at a third step S503, fault location data is generated and at a fourth step S504, this fault location data is communicated to monitoring units located on other trains.

Figure 6 depicts a flow diagram showing steps of a process performed by a fault-location map-update function operating on a processor incorporated in a pantograph monitoring unit in accordance with certain embodiments of the technique. If at a first step S601, a fault map update message is received, including, for example, new fault location data associated with a newly detected fault or data indicating a previously detected fault at a fault location has been rectified, at a second step S602 the locally stored fault location map is updated accordingly.

As will be understood, the functions described with reference to Figures 4, 5 and 6, and any other associated processes and algorithms for implementing examples of the invention can be implemented as software or firmware running locally at each vehicle or centrally as described above.

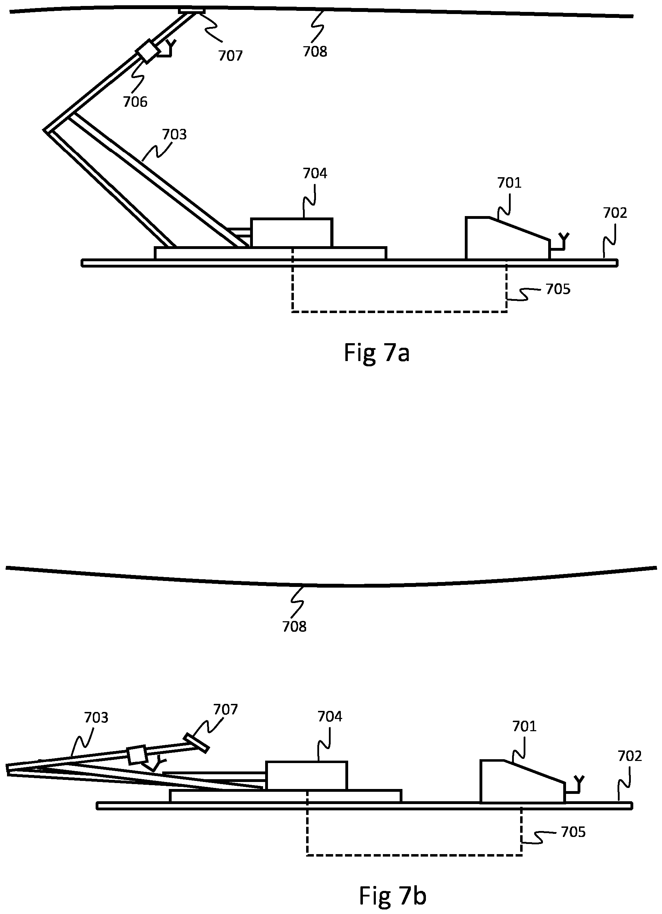

Figure 7a provides a simplified schematic diagram depicting a pantograph monitoring unit 701 (of a type described with reference to Figure 2) implemented in accordance with certain examples of the invention. The pantograph monitoring unit 701 is mounted on the roof 702 of a train in close proximity to a pantograph assembly 703.

The pantograph assembly 703 is mechanically coupled to an ADD 704 which is operable to extend and retract the pantograph assembly 703 to and from a connected position in which a contact strip of the 707 is in contact with the overhead powerline 708 (shown in Figure 7a), and a disconnected position (shown in Figure 7b) in which the contact strip of the 707 is disconnected from the overhead powerline 708. The pantograph monitoring unit 701 is connected to the ADD 704 via a control line 705 via which "disconnect" and "connect" control signals can be communicated from the pantograph monitoring unit 701 to the ADD 704. A wireless vibration sensor 706 is mounted on the pantograph assembly 703 and is configured to communicate sensor data to the pantograph monitoring unit 701 for performing the fault-location data-generating function described above.

The embodiments described above have been described with reference to examples in which the electrical-current collector is provided by a pantograph assembly and the electrical power line is provided by an overhead power line. However, examples of the technique can be used in other arrangements, for example where the electrical power line is provided by a so-called third rail and the electrical-current connector is provided with a contact shoe. Furthermore, the principles can also be applied to ground-level power supply systems, where the electrical power is transmitted through rails or embedded conduits at ground level, and the vehicle is equipped with a collector system that engages with these power delivery mechanisms without the need for overhead lines.

Although the example embodiments above have been described in terms of track-based railway trains, the technique can be applied to any suitable type of transport system in which moving vehicles are provided with propulsive power from a powerline network. Examples include tram systems, trolleybus systems, urban light rail systems and automated people movers (APMs) of the type often used in airports.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A method of adaptively disconnecting electrical-current collectors of vehicles (102a, 102b, 102c) powered by vehicle-mounted electrical-current collectors (103a,103b,103c) which receive electrical power from a powerline network, said method comprising:
storing, in data storage (205), a fault location map (215,302a,302b,302c,302d,302e) comprising data records indicative of fault locations of detected faults in the powerline network;
monitoring locations of vehicles (102a,102b,102c) that are powered from the powerline network via a vehicle-mounted electrical-current collector (103a,103b,103c);
detecting, in conjunction with the fault location map (215,302a,302b,302c,302d,302e) and the monitored locations, when a vehicle (102a,102b,102c) powered by a vehicle-mounted electrical-current collector (103a,103b,103c) is approaching a fault location, and responsive to which:
controlling an electrical-current collector position actuator (214) on the vehicle (102a,102b,102c) approaching the fault location to move the electrical-current connector (103a,103b,103c) to a disconnected position.

2. A method according to claim 1, wherein the data storage (205) comprises local data storage at each vehicle (102a,102b,102c) such that a local fault location map (302a,302b,302c,302d,302e) is stored locally at each vehicle (102a,102b,102c), and
the step of detecting when a vehicle (102a,102b,102c) is approaching a fault location is undertaken by a processor (204) located locally at each vehicle (102a,102b,102c) by processing the fault location map (302a,302b,302c,302d,302e) and location data generated by a location monitor (105a,105b, 105c) located locally at each vehicle (102a,102b,102c), and, responsive to detecting the vehicle (102a, 102b, 102c) approaching the fault location,
communicating by the processor (204) a disconnect control signal to the electrical-current collector position actuator (214) thereby controlling the electrical-current collector position actuator (214) to move the electrical-current connector (103a,103b,103c) to a disconnected position.

3. A method according to claim 2, wherein each vehicle (102a,102b,102c) comprises a fault detection system for detecting faults encountered in the powerline network which pose a damage risk to the vehicle-mounted electrical-current collector (103a,103b,103c) and/or the powerline network, a location monitor (105a,105b,105c), and a data transceiver (206) and, responsive to detecting a fault at a vehicle (102a,102b,102c), said method further comprises:
determining, using the location monitor (105a,105b,105c), a location of the vehicle (102a, 102b, 102c);
generating, using the determined location, fault location data indicative of a location of the detected fault;
communicating, using the data transceiver (206), the fault location data to the other vehicles (102a, 102b, 102c);
receiving, using the data transceiver (206) at each other vehicle (102a,102b,102c), the fault location data, and
updating, at each other vehicle (102a,102b,102c), the local fault location map (302a,302b,302c,302d,302e) at the local data storage (205) with the fault location data.

4. A method according to claim 1, further comprising:
detecting when a vehicle (102a,102b,102c) that was approaching the fault location and that has had its electrical-current connector (103a,103b,103c) moved to a disconnected position, has passed the fault location, and responsive to which:
controlling the electrical-current collector position actuator (214) of the vehicle (102a, 102b, 102c) to move the electrical-current connector (103a, 103b, 103c) to a connected position.

5. A method according to claim 2 or 3, further comprising:
detecting, by the processor (204) located locally at the vehicle (102a,102b,102c), when a vehicle (102a,102b,102c) that was approaching the fault location, and that has had its electrical-current connector (103a,103b,103c) moved to a disconnected position, has passed the fault location by processing the fault location data and location data generated by the location monitor (105a,105b,105c located locally at the vehicle (102a,102b,102c), and responsive to which
communicating, by the processor (204), a reconnect control signal to the electrical-current collector position actuator (214) thereby controlling the electrical-current collector position actuator (214) to move the electrical-current connector (103a, 103b, 103c) to a connected position.

6. An adaptive disconnection system for adaptively disconnecting electrical-current collectors (103a,103b,103c) of vehicles (102a,102b,102c) powered by vehicle-mounted electrical-current collectors (103a,103b,103c) which receive electrical power from a powerline network, said system comprising:
data storage (205) on which is stored a fault location map (215,302a,302b,302c,302d,302e) comprising data records indicative of fault locations of detected faults in the powerline network;
location monitoring apparatus (105a,105b, 105c) configured to monitor locations of vehicles (102a,102b,102c) that are powered from the powerline network via a vehicle-mounted electrical-current collector;
proximity detection apparatus configured to detect, in conjunction with the fault location map and monitored locations, when a vehicle (102a,102b,102c) powered by a vehicle-mounted electrical-current collector is approaching a fault location, wherein, responsive to detecting a vehicle (102a,102b,102c) powered by a vehicle-mounted electrical-current collector is approaching a fault location, the proximity detection apparatus is configured to control an electrical-current collector position actuator on the vehicle (102a,102b,102c) approaching the fault location to move the electrical-current connector to a disconnected position.

7. A system according to claim 6, wherein
the data storage (205) comprises distributed local data storage at each vehicle (102a, 102b, 102c) such that a local fault location map (302a,302b,302c,302d,302e) is stored locally at each vehicle (102a,102b,102c);
the location monitoring apparatus comprises a location monitor (105a,105b, 105c) located locally at the vehicle (102a,102b,102c) and the proximity detection apparatus comprises a processor (204) located locally at each vehicle (102a,102b,102c) which is configured to determine the location of the vehicle (102a, 102b, 102c) by processing the fault location map (105a, 105b, 105c) and location data generated by the location monitor (105a,105b,105c), and, responsive to detecting the vehicle (102a,102b,102c) approaching the fault location, the processor (204) is configured to:
communicate a disconnect control signal to the electrical-current collector position actuator (214) thereby controlling the electrical-current collector position actuator (214) to move the electrical-current connector (103a, 103b, 103c) to a disconnected position.

8. A system according to claim 7, wherein each vehicle (102a,102b,102c) comprises a fault detection system for detecting faults encountered in the powerline network which pose a damage risk to the vehicle-mounted electrical-current collector (103a,103b,103c) and/or the powerline network, a location monitor, and a data transceiver (206) and, responsive to detecting a fault at a vehicle (102a,102b,102c), the processor at the vehicle (102a,102b,102c) is configured to:
determine, using the location monitor (105a,105b,105c), a location of the vehicle (102a, 102b, 102c);
generate, using the determined location, fault location data indicative of a location of the detected fault;
communicate, using the data transceiver (206), the fault location data to the other vehicles (102a,102b,102c), whereupon, on receipt of the fault location data using the data transceiver (206) at each other vehicle (102a,102b,102c), the processor (204) at each other vehicle (102a,102b,102c) is configured to update the local fault location map (215) at the local data storage (205) with the fault location data.

9. A system according to claim 6, wherein the proximity detection apparatus is further configured to detect when a vehicle (102a,102b,102c) that was approaching the fault location and that has had its electrical-current connector (103a,103b,103c) moved to a disconnected position, has passed the fault location, and responsive to which control the electrical-current collector position actuator (214) of the vehicle (102a,102b,102c) to move the electrical-current connector (103a,103b,103c) to a connected position.

10. A system according to claim 7 or 8, wherein subsequent to the vehicle (102a,102b,102c) approaching the fault location, and having had its electrical-current connector (103a,103b,103c) moved to a disconnected position the local processor (204) of each vehicle (102a,102b,102c) is further configured to:
detect if the vehicle (102a,102b,102c) has now passed the fault location by processing the fault location map (215) and location data generated by the local location monitor (105a,105b,105c), and responsive to detecting the vehicle (102a, 102b, 102c) has now passed the fault location:
communicate a reconnect control signal to the electrical-current collector position actuator (214) thereby controlling the electrical-current collector position actuator (214) to move the electrical-current connector (103a, 103b, 103c) to a connected position.

11. Apparatus for adaptively disconnecting an electrical-current collector (103a,103b,103c) of a vehicle (102a,102b,102c) powered by a vehicle-mounted electrical-current collector (103a,103b,103c) which receives electrical power from a powerline network, said apparatus comprising:
data storage (205) on which is stored a fault location map (215) comprising data records indicative of fault locations of detected faults in the powerline network;
location monitoring apparatus (105a,105b,105c) configured to monitor a location of the vehicle (102a, 102b, 102c);
proximity detection apparatus configured to:
detect, in conjunction with the fault location map (215) and monitored location, when the vehicle (102a,102b,102c) is approaching a fault location, and responsive to detecting the vehicle (102a, 102b, 102c) is approaching a fault location,
control an electrical-current collector position actuator (214) on the vehicle (102a,102b,102c) to move the electrical-current connector (103a,103b,103c) to a disconnected position.

12. Apparatus according to claim 11, wherein the apparatus is configured to be fitted to the vehicle (102a,102b,102c), wherein the proximity detection apparatus comprises a processor (204) and the location monitoring apparatus comprises a location monitor (105a,105b,105c), and the processor (204) is configured to determine the location of the vehicle (102a,102b,102c) by processing the fault location map (215) and location data generated by the location monitor (105a,105b,105c), and, responsive to detecting the vehicle (102a,102b,102c) approaching the fault location, the processor (204) is configured to:
communicate a disconnect control signal to the electrical-current collector position actuator (214) thereby controlling the electrical-current collector position actuator (214) to move the electrical-current connector (103a, 103b, 103c) to a disconnected position.

13. Apparatus according to claim 12, further comprising:
a fault detection system for detecting faults encountered in the powerline network which pose a damage risk to the vehicle-mounted electrical-current collector (103a,103b,103c) and/or the powerline network, and
a data transceiver (206), wherein, responsive to the fault detection system detecting a fault, said processor (204) is configured to:
determine, using the location data generated by the location monitor (105a,105b,105c), a location of the vehicle (102a,102b,102c);
generate, using the determined location, fault location data indicative of a location of the detected fault;
communicate, using the data transceiver (206), the fault location data to other apparatus for adaptively disconnecting an electrical-current collectors (103a,103b,103c) located at other vehicles (102a, 102b, 102c).

14. Apparatus according to claim 13, wherein subsequent to detecting that the vehicle (102a,102b,102c) was approaching a fault location, processor (204) is further configured to:
detect if the vehicle, has now passed the fault location by processing the fault location data and location data generated by the location monitor (105a,105b,105c), and responsive to detecting the vehicle (102a, 102b, 102c) has now passed the fault location:
communicate a reconnect control signal to the electrical-current collector position actuator (214) thereby controlling the electrical-current collector position actuator (214) to move the electrical-current connector (103a, 103b, 103c) to a connected position.

15. A computer program comprising computer executable instructions which when implemented on a computing system, controls the computing system to perform a method according to claim any of claims 1 to 10.
